# EUROPEAN PATENT SPECIFICATION

(11) **EP 3 238 367 B1**
(45) Date of publication and mention of the grant of the patent: **22.05.2019**
(21) Application number: 14819028.3
(22) Date of filing: 23.12.2014
(51) Int. Cl.: H04L 9/08, G06F 21/46

(54) **TECHNIQUE FOR GENERATING A PASSWORD**
TECHNIK ZUR ERZEUGUNG EINES PASSWORTS
TECHNIQUE DE GÉNÉRATION D'UN MOT DE PASSE

(43) Date of publication of application: 01.11.2017
(73) Proprietor: Telefonaktiebolaget LM Ericsson (publ), 164 83 Stockholm (SE)
(72) Inventor: SOÓS, Gábor, H-1125 Budapest (HU)
(74) Representative: Ericsson
(86) International application number: PCT/EP2014/079264
(87) International publication number: WO 2016/102019

(56) References cited:
- US-A- 4 800 590
- US-A- 5 638 513
- US-A- 6 151 593

## Description

### Technical Field

The present disclosure generally relates to generating passwords. More specifically, and without limitation, a method and a device for generating a password based on an input sequence are provided.

### Background

Passwords are the most widely used tool for computer access security. In parallel with increasing computational power, a complexity of the passwords has to increase for resistance against systematic or brute-force attacks. Too often, easy-to-guess expressions such as family member name, birthday, phone number and the like are included in the passwords resulting in security vulnerability. Information entropy of the password is an exemplary measure for the complexity and, thus, the strength of the password.

Particularly in mobile Internet access, the user conventionally has to know the password by heart. In order to free the user from the burden of memorizing a plurality of complex passwords, existing access techniques include biometric input, e.g., using fingerprint sensors. The biometric input is analyzed and stored, e.g., besides a conventional user password. However, a user remains unaware of security vulnerability, e.g., if the entropy of a biometrics-based password is too low. Furthermore, the stored biometric data may be accessed by an intruder. Moreover, additional or dedicated hardware is required for receiving the biometric input, which is in conflict with requirements for costs, volume and power consumption, particularly for mobile devices.

Document US 6,151,593 discusses, in addition to fingerprints, keystroke dynamics as an example for biometric security. A timing vector is collected and used with a model protecting an owner from impostors. Building the model, e.g., by means of a neural network, involves storing additional information that is eventually not necessary for the model, such as typed content or images underlying an image recognizing process, which could fall into wrong hands. Furthermore, complex and tedious training sessions are necessary for building the model of user patterns, including continuously monitoring user input for pattern recognition.

Further prior art solutions are disclosed in documents: US 5,638,513 and US 4,800,590.

Hence, strong conventional passwords are too complex to be memorized and biometrics-based passwords do not guarantee sufficient complexity.

### Summary

Accordingly, there is a need for a technique that allows generating passwords with controllable password complexity.

The above and other objects are achieved by means of the appended set of claims.

As to one aspect, a method of generating a password is provided. The method comprises a step of receiving an input sequence, wherein the input sequence is indicative of a time sequence; and a step of generating the password based on an output of a pseudo-random number generator and the input sequence.

The expression "password" as used herein also encompasses a passphrase, e.g., including one or more blank characters and/or control characters.

By receiving the input sequence that is also indicative of the time sequence, the generated password is further individualized beyond a content of the input sequence without increasing the burden for the user providing the input sequence in at least some implementations.

A complexity of the password, e.g., a length of the password and/or an information entropy of the password, may be greater than a complexity of the user input. E.g., the complexity of the generated password may exceed a combined complexity of a content of the input sequence and the time sequence.

The complexity of the password may be controlled by the pseudo-random number generator. The pseudo-random number generator may include at least one of a hash function, a linear feedback shift register, a non-linear feedback shift register and a non-linear output function coupled to the shift register.

The password may be generated based on both the output of the pseudo-random number generator and the input sequence by influencing an input of the pseudo-random number generator based on the input sequence and/or by modifying the output of the pseudo-random number generator based on the input sequence. By way of example, the content of the input sequence and the time sequence may influence initial values that initialize the pseudo-random number generator.

Alternatively or in addition, the output of the pseudo-random number generator may be selected in sections and/or scrambled depending on the input sequence.

The pseudo-random number generator may include internal memory. A period of the pseudo-random number generator, e.g., a length of the output without recurrence, may be equal to 2ⁿ - 1 bits, wherein an internal state of the pseudo-random number generator includes n bits. For example, a register length of the feedback shift register may be equal to n. The number of n bits may be equal to 16, 32, 64, 128 or more.

The input sequence may include a sequence of entries. The time sequence may be indicative of a time sequence for the entries. Each entry may include a character, e.g., a key code of a keyboard, an alphabetic character, a blank character, a control character, a symbol and/or a digit. Alternatively or in addition, each entry may include a group of characters. A plurality of characters in the input sequence may be referred to as a content sequence. Each entry may include a pair of character and timing information associated with the character. The input sequence may include associated content and time sequences.

The time sequence may be indicative of an absolute or relative timing for each of the entries. E.g., the time sequence may include a plurality of timestamps. Each timestamp may be associated with at least one of the entries. Alternatively or in addition, the time sequence may include time differences for serial or consecutive entries. Each pair of consecutive entries may be associated with a time difference.

The technique is implementable without additional or dedicated input hardware. The time sequence may include timing information for pressing and/or releasing a key on a keyboard. The keyboard may include a character set extending beyond a local or regional character set. The character set may be virtually extended.

In case the time sequence includes the absolute timing or the timestamps, the step of generating the password may include computing the relative timing or the time differences based on the absolute timing and/or the timestamps.

The password may be generated from sections of the output of the pseudo-random number generator. For example, the output of the pseudo-random number generator may be (e.g., logically or physically) partitioned into a plurality of sections, out of which the sections for generating the password may be selected, e.g., based on the input sequence. The password may be generated by concatenating the selected sections.

A length of the generated password may be an integer multiple of a length of the input sequence. One section out of the plurality of sections may be selected for each entry in the input sequence. The generated password may be longer than the input sequence according to an integer multiplier. A length of each of the sections may correspond to the integer multiplier. The integer multiplier may be equal to 2, 4, 8, 10, or greater than 10.

The selection among the plurality of sections may depend on the time differences between consecutive entries in the input sequence according to the time sequence. Each of the time differences may be nonlinearly discretized, e.g., to an integer value. The selection in the step of generating the password may depend on the discretized integer values. The nonlinear discretization may have discretization steps that monotonically increase in time for larger time differences.

Each section for generating the password may be selected based on a selecting function of the entry and the (e.g., linear or discretized) time difference associated with the entry, e.g., the time difference to the next consecutive entry. Alternatively or in addition, the selection may be based on a selecting function of the entry and an iteration of all time differences in the time sequence up to the entry. The iteration may include an addition and/or a multiplication of the (e.g., linear or discretized) time differences.

At least one identifier may be received. The pseudo-random number generator may be initialized using the at least one identifier. The at least one identifier may include at least one of a user name, a user identifier and a service provide.

As to another aspect, a computer program product is provided. The computer program product comprises program code portions for performing any one of the steps of the method aspect disclosed herein when the computer program product is executed by one or more computing devices. The computer program product may be stored on a computer-readable recording medium. The computer program product may also be provided for download via a data network, e.g., the Internet and/or a network accessed by a mobile device implementing the technique.

As to a hardware aspect, a device for generating a password is provided. The device comprises a receiving unit adapted to receive an input sequence, wherein the input sequence is indicative of a time sequence; and a generating unit adapted to generate the password based on an output of a pseudo-random number generator and the input sequence.

The device, e.g., any one of its units or a dedicated unit, may further be adapted to perform any one of the steps of the method aspect and/or may include any feature disclosed in the context of the method aspect.

### Brief Description of the Drawings

In the following, the present disclosure is described in more detail with reference to exemplary embodiments illustrated in the drawings, wherein:
- Fig. 1: illustrates a schematic block diagram of a device for generating a password;
- Fig. 2: shows a flowchart for a method of generating a password, which is implementable in the device of Fig. 1;
- Fig. 3: shows a schematic block diagram for a first embodiment of the device of Fig. 1;
- Fig. 4: schematically illustrates an input sequence indicative of a time sequence, which is receivable by the device of Fig. 1;
- Fig. 5: schematically illustrates a first instance of the input sequence of Fig. 4.
- Fig. 6: shows a table representing a second instance of the input sequence of Fig. 4;
- Fig. 7: shows a schematic block diagram for a second embodiment of the device of Fig. 1;
- Fig. 8: shows a schematic block diagram for a third embodiment of the device of Fig. 1;
- Fig. 9: schematically illustrates code portions for a first embodiment of a generating unit in the device of Fig. 1; and
- Fig. 10: schematically illustrates code portions for a second embodiment of the generating unit in the device of Fig. 1.

### Detailed Description

In the following description, for purposes of explanation and not limitation, specific details are set forth, such as specific device environments and specific computation schemes in order to provide a thorough understanding of the technique disclosed herein. It is apparent to one skilled in the art that the technique may be practiced in other embodiments that depart from these specific details. Moreover, while the following embodiments are primarily described for a mobile device accessing a telecommunications network, it is readily apparent that the technique described herein may also be implemented in mobile and stationary communications networks or in components for Near Field Communication (NFC), e.g., on a passive and/or active side of the NFC.

Moreover, those skilled in the art will appreciate that functions, steps and units explained herein may be implemented using software functioning in conjunction with a programmed microprocessor, an Application Specific Integrated Circuit (ASIC), a Field Programmable Gate Array (FPGA) or a general purpose computer, e.g., including an Advanced RISC Machine (ARM). It will also be appreciated that, while the following embodiments are primarily described in context with methods and devices, the technique may also be embodied in a computer program product as well as in a system comprising a computer processor and memory coupled to the processor, wherein the memory is encoded with one or more programs that may perform the functions and steps or implement the units disclosed herein.

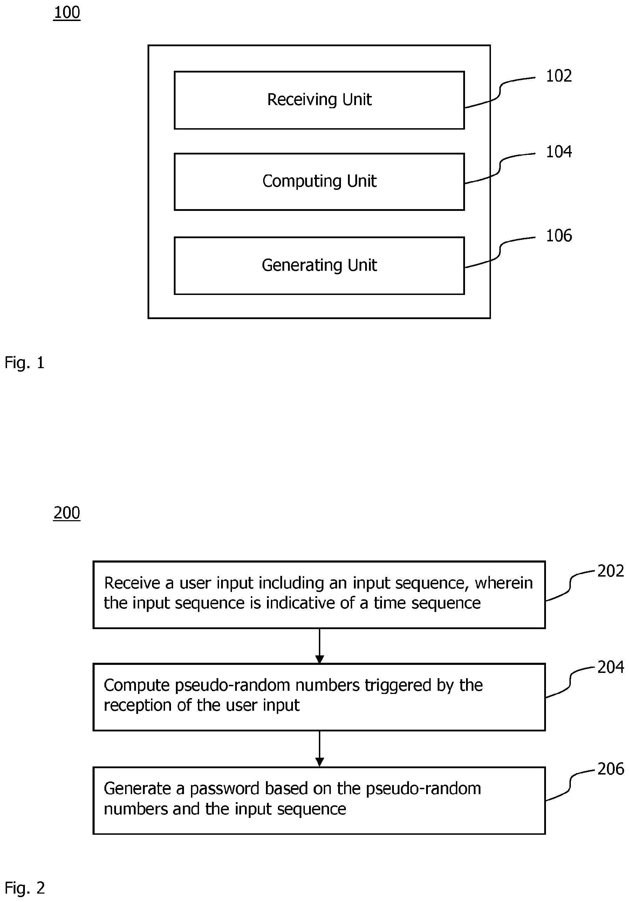

Fig. 1 schematically illustrates a device 100 for generating a password. The device 100 includes a receiving unit 102 for receiving a user input, optionally a computing unit 104 for computing a stream of pseudo-random numbers, and a generating unit 106 for generating the password based on both an output of the computing unit 104 and the user input. The pseudo-random number stream may be received and/or prestored in the device 100, in which case the computing unit 104 may be replaced by memory storing the pseudo-random number stream.

Fig. 2 shows a flowchart for a method 200 of generating a password. In a step 202 of the method 200, a user input including an input sequence is received. The input sequence is indicative of a time sequence. In a step 204 of the method 200, pseudo-random numbers are computed. The step 204 is triggered by the reception of the user input in one implementation. In another implementation, the stream of pseudo-random numbers is computed and/or stored before the user input is received.

A password is generated in a step 206 of the method 200 based on the pseudo-random numbers and the input sequence. The password is a discontinuous function of the time sequence indicated by the input sequence.

The steps 202, 204 and 206 may be performed by the units 102, 104 and 106, respectively.

The input sequence may represent a sequence of knocking, tapping, typing and/or keystrokes. The generated password is applicable for user authentication, user identification and/or user login.

The technique generates a unique and strong password for an access point, e.g., at a mobile device wirelessly connected to a radio access network for accessing a service via an insecure data network, e.g., the Internet. The uniqueness may result from the discontinuous dependency of the generated password on the input sequence.

The strength of the generated password may result from the length of the password derived from the stream of pseudo-random numbers in conjunction with the dependency on the time sequence. For example, by combining timing information according to the time sequence for knocking, tapping, typing and/or keystrokes with a high-entropy pseudo-random number stream, the generated password is user-specific by virtue of the dependency and inherits the high entropy of the pseudo-random number stream. For example, the input sequence may represent a user pattern based on which the pseudo-random number stream is masked for generating the password. A mask applied to the pseudo-random number stream for generating the password may be shifted according to the input sequence.

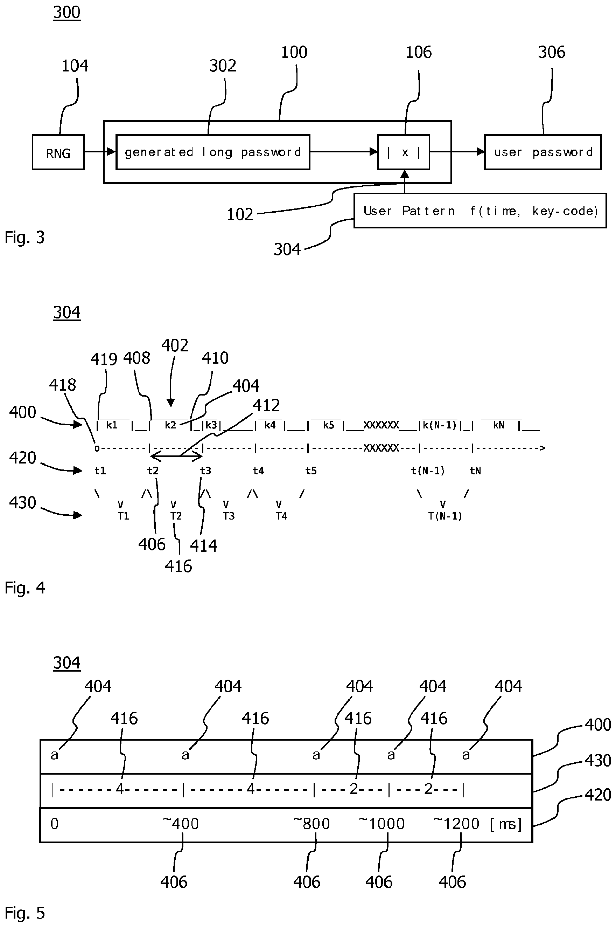

Fig. 3 shows a schematic block diagram 300 for a first embodiment of the device 100. A high-entropy pseudo-random number stream 302 is generated by the pseudo-random number generator 104. The pseudo-random number stream 302 may be considered as a long password source. In one use case of the technique, the pseudo-random number stream 302 is a common source for generating a password for each of a plurality of users. In another use case, the pseudo-random number stream 302 is generated for each user, and optionally deleted after generating the password 306.

A proper subset, e.g., a sequence fraction, of the pseudo-random number stream 302 (or a combination of such sequence fractions) is selected based on the input sequence 304. The generating unit 106 generates the user-specific password 306 according to the selection.

In the first embodiment shown in Fig. 3, the input sequence 304 represents a user pattern including entries for key codes and associated timing information defining the time sequence. A symbol "x" in the generating unit 106 represents the step 206 of generating the password 306 as a sub-sequence of the pseudo-random number stream 302 selected based on the key codes and the time sequence for the key codes.

Fig. 4 schematically illustrates the input sequence 304 for the example of keystrokes forming the entries 402 of the input sequence 304. Each entry 402 includes a character, e.g., a key code value 404. In the sequence 304 shown in Fig. 4, time linearly increases from left to right. When a key (e.g., of a mechanical keyboard or an on-screen keyboard) is pressed, timing information 406 associated with the entry 402 is indicative of the pressing time 408. The key is pressed until a releasing time 410. A time difference 412 is computed using a consecutive keystroke event indicated by consecutive timing information 414. The time difference 412 is associated with the entry 402 in the input sequence 304.

The time difference 412 for each entry 402 is transformed (e.g., discretized) to an integer value 416. The integer value 416 depends non-linearly on the time difference 412. For example, the nonlinear transformation may include a logarithm or an inverse power of the time difference 412. The nonlinear transformation may be tabulated.

The content of the input sequence 304, e.g., the sequence of key code values, is generally referred to by reference sign 400. In the implementation of the input sequence 304 illustrated in Fig. 4, the time sequence 420 is represented by the sequence of timing information 406 for the entries 402 of the input sequence 304. The timing information 406 may be represented relative to an origin 418, e.g., a first pressing time 419 of the first entry in the input sequence 304. Alternatively or in addition, the time sequence 420 is represented by the sequence of time differences 412, each of which is associated with one of the entries 402 in the input sequence 304. The sequence of discretized time differences 416, each of which is associated with one of the entries 402 of the input sequence 304, defines a discretized time sequence 430.

Fig. 5 schematically illustrates a first instance of the input sequence 304. In the instance illustrated in Fig. 5, the same character 404, namely the lower-case character "a", is pressed according to an aperiodic pattern, which is represented by the time sequence 420. The aperiodicity is also reflected by the discretized time sequence 430 with largely reduced memory requirements.

Based on the exemplary content sequence 400 including 5 entries 402 of the key code 97 representing the character "a" and the discretized time information 430, the generating unit 106 generates the password 306. The pseudo-random number sequence 302 from which the password 306 is selected according to the input sequence 304 may include 4 kilobytes. Each of the pseudo-random numbers may represent one bit, one byte or one word or any other information unit defining the granularity for selecting the sections for generating the password 306 based on the input sequence 304.

An exemplary password 306 resulting from the low-complexity instance of the input sequence 304 shown in Fig. 5 is:
j|QCruilUySvYBfsAHwuMZagF'MpTiE)W_aToGO.

As becomes apparent from above example, even a low-complexity input sequence 304 results in a password 306, the complexity of which can be determined by the pseudo-random number stream 302. Particularly, the complexity of the password 306 may be significantly greater than the complexity of the content sequence 400 and even greater than the complexity of the combined content sequence 400 and the discretized time sequence 430. Thus, the burden on a user for remembering a complex password is reduced without reducing the strength of the generated password.

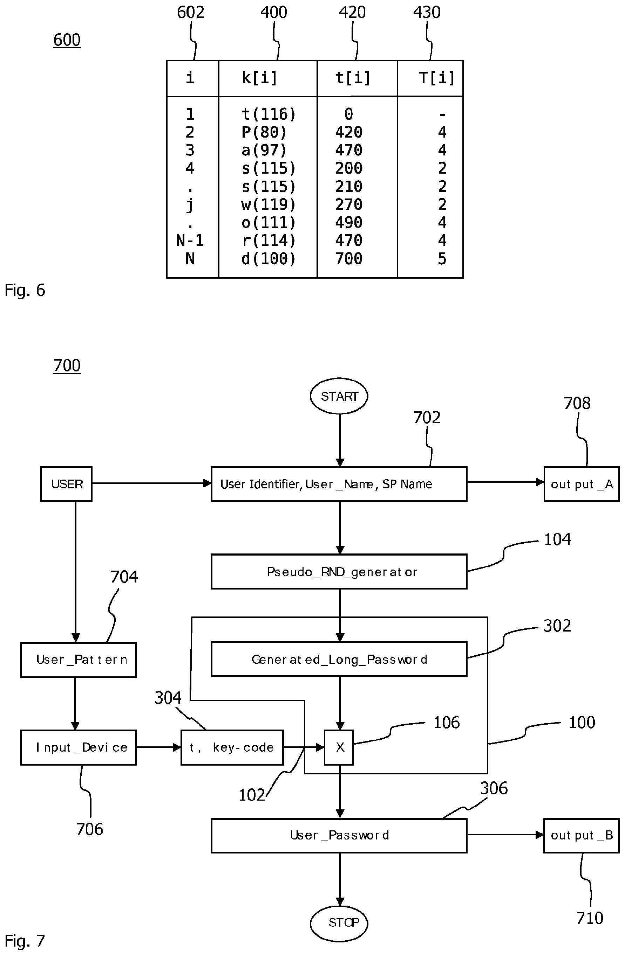

Fig. 6 shows a table 600 representing a second instance of the input sequence 304. The content sequence 400 includes a sequence of alphabetic characters. The complexity of the content sequence 400 is not sufficient for a secure password. The complexity is substantially increased in combination with the time sequence 420 represented by the discretized time sequence 430. Since the input sequence 304 is just one input channel or source for the entropy of the generated password 306, combining the entropy provided by the input sequence 304 with the entropy of the fractions provided by the pseudo-random number sequence stream 302 substantially increases the entropy of the generated password 306 compared to the input sequence 304. Optionally, initial values and/or a mechanism underlying the pseudo-random number generator 104 may be secret and/or user-specific.

Fig. 7 shows a schematic block diagram 700 including a second embodiment of the device 100. Like features are referred to by corresponding reference signs.

A user inputs at least one identifier 702, e.g., non-secret login information. The at least one identifier 702 may include a user identifier, a user name, an account number, a service provider identifier, a service provider name, etc. Based on the at least one identifier 702, the pseudo-random number generator 104 is initialized. The pseudo-random number generator 104 is operated for outputting the pseudo-random number stream 302 according to a predetermined length, which is preferably equal to or less than a period of the pseudo-random number generator 104.

The user further provides a user pattern 704 at an input device 706. The input device may be any conventional input device available, e.g., at a mobile device. The input device 706 does not have to be a unit dedicated for receiving the user pattern 704 such as biometric-specific sensors. The input device 706 provides the input sequence 304 to the device 100, based on which the user password 306 is selected.

Non-secret login information (e.g., including the at least one indicator 702) and secret login information (e.g., including the password 306) are provided as credentials 708 and 710, respectively.

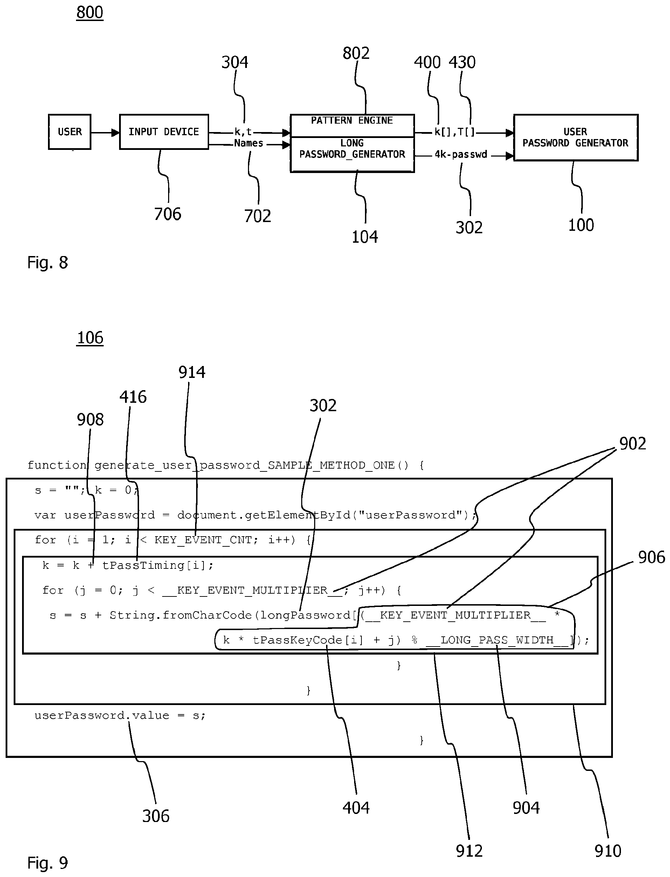

Fig. 8 shows a schematic block diagram 800 including a third embodiment of the device 100. Like features are indicated by corresponding reference signs.

A common input device 706 is used for both receiving the user pattern 704 (similar to the second embodiment) as well as for receiving the at least one identifier 702. The input sequence 304 resulting from the user pattern 704 is transformed to the sequences 400 and 430 by a pattern engine 802. While the pattern engine 802 is a pre-processing stage outside of the device 100 in the embodiment of the block diagram 800, the pattern engine 802 and/or the pseudo-random number generator 104 are alternatively included in the device 100.

The second and third embodiments shown in Figs. 7 and 8, respectively, generate a user-specific pseudo-random number stream 302 "on the fly" without storing, exchanging or publishing the pseudo-random number stream 302. Alternatively, the pseudo-random number stream 302 is stored (e.g., inaccessibly) within the device 100 for generating a plurality of different passwords 306, e.g., as described for the first embodiment of the device 100 shown in Fig. 3.

Fig. 9 schematically illustrates code portions for implementing the step 206 in the unit 106. Like features are indicated by corresponding reference signs. In order to increase the length of the generated password 306 despite of few entries, the generated password 306 is multiple times longer than the number of N entries 402 in the input sequence 304. In the implementation of the unit 106 shown in Fig. 9, the number N of entries 402 in the input sequence 304 is a parameter shown at reference sign 914 and the multiplier is shown at reference sign 902. The length of the pseudo-random number stream 302 is a parameter shown at reference sign 904.

The generating unit 106 assigns N segments out of the pseudo-random number stream 302. One segment is assigned for each entry 402 in the input sequence 304 in an outer loop 910 of the generating unit 106. The entry 402 is indicated by an index i in the outer loop 910. The assigned segments are concatenated for generating the password 304.

An inner loop 912 selects (or masks) the segment to be concatenated for the entry 402 at index i. The selection is determined by a selecting function 906. Each segment has a length corresponding to the multiplier 902.

The pseudo-random number stream 302 is partitioned into a plurality of equal-sized segments by the selecting function 906, since a starting point of the segment assigned to the entry 402 at index i (and to be subsequently concatenated for generating the password 304) is an integer multiple of the multiplier 902. The partition is cyclically continued by virtue of the modulo operation (represented by the symbol "%" in the selecting function 906). The selected segment is specified by the starting point
k • tPassKeyCode [i].

Thus, the selection depends on the character 404 (represented by tPassKeyCode [i]) of the entry 402 at index i. The selection further depends on a shift variable k computed according to a shift function 908. In the first implementation of the generating unit 106 shown in Fig. 9, the shift function 908 is additive.

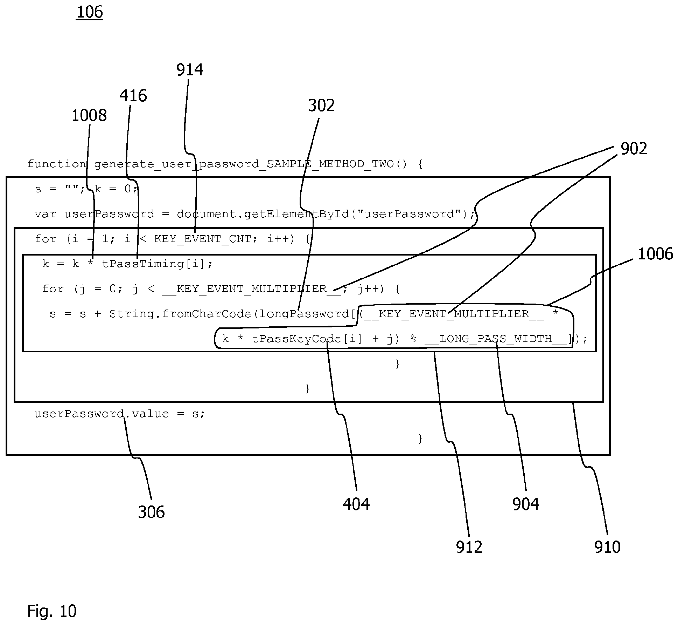

Fig. 10 shows a second implementation of the generating unit 106. Like features are identified by corresponding reference signs. The second implementation differs in that the segments of the pseudo-random number stream 302 are selected according to a selecting function 1006 based on a multiplicative shift function 1008.

While above exemplary implementation of the generating unit 106 are simplified for the benefit of clarity, the generating unit 106 can be implemented using a selecting function and/or a shift function more complex than the functions 906, 1006 and 908, 1008, respectively, e.g., for improved resistance to cryptanalytic attacks.

As has become apparent from above exemplary embodiments, at least some embodiments generate strong passwords based on a light-weight input sequence. The technique is implementable as a front end for existing access points, e.g., in mobile telecommunication devices. Since at least some of the embodiments do not require dedicated input devices, the technique can be readily implemented and introduced. Introducing the technique does not require hardware upgrades, does not necessarily add to maintenance services or cause downtime of user and network components.

The technique is implementable as a portable password generator. While the technique is compatible with biometric approaches, the technique does not require biometric input. Particularly, no biometric data has to be stored.

Due to the controllable entropy of the generated password, the technique allows generating more secure passwords in an easy, accessible and user-friendly way.

Conventional key-loggers are unable to record timing information and, least of all, to process timing information in conjunction with a pseudo-random number stream. The technique allows integrating password generation and user pattern reception. The technique is not restricted to a particular type of input device. Particularly, the technique is compatible with key codes of mechanical keys and position information of touch screens.

Based on an entropy of the input sequence, the technique can optionally provide a feedback to a user as to the quality of the user pattern. Furthermore, a complexity of the generated password can be guaranteed. The user does not need to memorize a complex password. The user may simply memorize the user pattern.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200) of generating a password (306), the method comprising:
receiving (202) an input sequence (304) including a sequence of entries (402) and including a time sequence (420) associated with the sequence of entries (402) ; and
generating (206) the password (306) based on an output (302) of a pseudo-random number generator (104), the sequence of entries (402) and the time sequence (420) of the input sequence (304).

2. The method of claim 1, wherein the time sequence (420) includes timestamps (406), each of the entries (402) being associated with one of the timestamps (406).

3. The method of claim 2, wherein each of the timestamps (406) specifies a time of a keystroke (408) for the associated entry (402).

4. The method of any one of claims 1 to 3, wherein the password (306) is generated from sections of the output (302) of the pseudo-random number generator (104), wherein optionally the password (306) is generated by concatenating (910) the sections from which the password (306) is generated.

5. The method of claims 4, wherein the output (302) of the pseudo-random number generator (104) is partitioned into a plurality of sections, out of which the sections for generating the password (306) are selected based on the input sequence (304).

6. The method of claim 5, wherein a length of the password (306) is an integer multiple (902) of a length (914) of the input sequence (304).

7. The method of claim 5 or 6, wherein one section out of the plurality of sections is selected for each entry (402) in the input sequence.

8. The method of any one of claims 5 to 7, wherein the selection depends on time differences (412) between consecutive entries (406, 414), and wherein optionally each of the time differences (412) is nonlinearly discretized to an integer value (416).

9. The method of claim 8, wherein each section for generating the password is selected based on a function (906; 1006) of the entry (402) and the time difference (412; 416) associated with the entry (402).

10. The method of any one of claims 1 to 9, further comprising:
receiving at least one identifier (702); and
initializing the pseudo-random number generator (104) using the at least one identifier (702).

11. The method of claim 10, wherein the at least one identifier (702) includes at least one of a user name, a user identifier and a service provider name.

12. A computer program product comprising program code portions for performing the steps of any of the claims 1 to 11 when the computer program product is executed on one or more computing device.

13. The computer program product of claim 12, stored on a computer-readable recording medium.

14. A device (100) for generating a password (306), the device comprising:
a receiving unit (102) adapted to receive an input sequence (304) including a sequence of entries (402) and including a time sequence (420) associated with the sequence of entries (402); and
a generating unit (106) adapted to generate the password (306) based on an output (302) of a pseudo-random number generator (104), the sequence of entries (402) and the time sequence (420) of the input sequence (304).

15. The device of claim 14, configured to perform the method of any of claims 1 to 11.

## Patentansprüche

1. Verfahren (200) zur Erzeugung eines Kennworts (306), wobei das Verfahren umfasst:
Empfangen (202) einer Eingabesequenz (304), die eine Sequenz von Einträgen (402) umfasst und eine Zeitsequenz (420) umfasst, die mit der Sequenz von Einträgen (402) assoziiert ist; und
Erzeugen (206) des Kennworts (306) basierend auf einer Ausgabe (302) eines Pseudozufallszahlengenerators (104), der Sequenz von Einträgen (402) und der Zeitsequenz (420) der Eingabesequenz (304).

2. Verfahren nach Anspruch 1, wobei die Zeitsequenz (420) Zeitstempel (406) umfasst, und jeder der Einträge (402) mit einem der Zeitstempel (406) assoziiert wird.

3. Verfahren nach Anspruch 2, wobei jeder der Zeitstempel (406) eine Zeit eines Tastenanschlags (408) für den assoziierten Eintrag (402) spezifiziert.

4. Verfahren nach einem der Ansprüche 1 bis 3, wobei das Kennwort (306) aus Abschnitten der Ausgabe (302) des Pseudozufallszahlengenerators (104) erzeugt wird, wobei das Kennwort (306) optional durch Verketten (910) der Abschnitte erzeugt wird, aus welchen das Kennwort (306) erzeugt wird.

5. Verfahren nach Anspruch 4, wobei die Ausgabe (302) des Pseudozufallszahlengenerators (104) in eine Mehrzahl von Abschnitten geteilt wird, aus welchen die Abschnitte zum Erzeugen des Kennworts (306) basierend auf der Eingabesequenz (304) ausgewählt werden.

6. Verfahren nach Anspruch 5, wobei eine Länge des Kennworts (306) ein ganzzahliges Vielfaches (902) einer Länge (914) der Eingabesequenz (304) ist.

7. Verfahren nach Anspruch 5 oder 6, wobei ein Abschnitt aus der Mehrzahl von Abschnitten für jeden Eintrag (402) in der Eingabesequenz ausgewählt wird.

8. Verfahren nach einem der Ansprüche 5 bis 7, wobei die Auswahl von Zeitunterschieden (412) zwischen aufeinanderfolgenden Einträgen (406, 414) abhängt, und wobei optional jeder der Zeitunterschiede (412) nichtlinear zu einem ganzzahligen Wert (416) diskretisiert wird.

9. Verfahren nach Anspruch 8, wobei jeder Abschnitt zum Erzeugen des Kennworts basierend auf einer Funktion (906; 1006) des Eintrags (402) und des mit dem Eintrag (402) assoziierten Zeitunterschieds (412; 416) ausgewählt wird.

10. Verfahren nach einem der Ansprüche 1 bis 9, ferner umfassend:
Empfangen mindestens einer Kennung (702); und
Initialisieren des Pseudozufallszahlengenerators (104) unter Verwendung der mindestens einen Kennung (702).

11. Verfahren nach Anspruch 10, wobei die mindestens eine Kennung (702) mindestens eines von einem Benutzernamen, einer Benutzerkennung und einem Dienstanbieternamen umfasst.

12. Computerprogrammprodukt, umfassend Programmcodeabschnitte zum Ausführen der Schritte nach einem der Ansprüche 1 bis 11, wenn das Computerprogrammprodukt auf einer oder mehreren Computervorrichtungen ausgeführt wird.

13. Computerprogrammprodukt nach Anspruch 12, gespeichert auf einem computerlesbaren Aufzeichnungsmedium.

14. Vorrichtung (100) zum Erzeugen eines Kennworts (306), wobei die Vorrichtung umfasst:
eine Empfangseinheit (102), die so ausgelegt ist, dass sie eine Eingabesequenz (304) empfängt, die eine Sequenz von Einträgen (402) umfasst und eine Zeitsequenz (420) umfasst, die mit der Sequenz von Einträgen (402) assoziiert ist; und
eine Erzeugungseinheit (106), die so ausgelegt ist, dass sie das Kennwort (306) basierend auf einer Ausgabe (302) eines Pseudozufallszahlengenerators (104), der Sequenz von Einträgen (402) und der Zeitsequenz (420) der Eingabesequenz (304) erzeugt.

15. Vorrichtung nach Anspruch 14, die zum Durchführen des Verfahrens nach einem der Ansprüche 1 bis 11 konfiguriert ist.

## Revendications

1. Procédé (200) de génération d'un mot de passe (306), le procédé comprenant :
la réception (202) d'une séquence d'entrée (304) incluant une séquence de saisies (402) et incluant une séquence de temps (420) associée à la séquence de saisies (402) ; et
la génération (206) du mot de passe (306) sur la base d'une sortie (302) d'un générateur de nombre pseudo-aléatoire (104), de la séquence de saisies (402) et de la séquence de temps (420) de la séquence d'entrée (304) .

2. Procédé selon la revendication 1, dans lequel la séquence de temps (420) inclut des horodatages (406), chacune des saisies (402) étant associée à l'un des horodatages (406).

3. Procédé selon la revendication 2, dans lequel chacun des horodatages (406) spécifie un temps d'une frappe (408) pour la saisie associée (402).

4. Procédé selon l'une quelconque des revendications 1 à 3, dans lequel le mot de passe (306) est généré à partir de sections de la sortie (302) du générateur de nombre pseudo-aléatoire (104), dans lequel facultativement le mot de passe (306) est généré par la concaténation (910) des sections à partir desquelles le mot de passe (306) est généré.

5. Procédé selon la revendication 4, dans lequel la sortie (302) du générateur de nombre pseudo-aléatoire (104) est partitionnée en une pluralité de sections, parmi lesquelles les sections pour la génération du mot de passe (306) sont sélectionnées sur la base de la séquence d'entrée (304).

6. Procédé selon la revendication 5, dans lequel une longueur du mot de passe (306) est un multiple entier (902) d'une longueur (914) de la séquence d'entrée (304) .

7. Procédé selon la revendication 5 ou 6, dans lequel une section parmi la pluralité de sections est sélectionnée pour chaque saisie (402) dans la séquence d'entrée.

8. Procédé selon l'une quelconque des revendications 5 à 7, dans lequel la sélection dépend de différences de temps (412) entre des saisies consécutives (406, 414), et dans lequel facultativement chacune des différences de temps (412) est discrétisée non linéairement à une valeur entière (416).

9. Procédé selon la revendication 8, dans lequel chaque section pour la génération du mot de passe est sélectionnée sur la base d'une fonction (906 ; 1006) de la saisie (402) et de la différence de temps (412 ; 416) associée à la saisie (402).

10. Procédé selon l'une quelconque des revendications 1 à 9, comprenant en outre :
la réception d'au moins un identifiant (702) ; et
l'initialisation du générateur de nombre pseudo-aléatoire (104) en utilisant l'au moins un identifiant (702) .

11. Procédé selon la revendication 10, dans lequel l'au moins un identifiant (702) inclut au moins l'un d'un nom d'utilisateur, d'un identifiant d'utilisateur et d'un nom de fournisseur de service.

12. Produit de programme informatique comprenant des portions de code de programme pour effectuer les étapes selon l'une quelconque des revendications 1 à 11 lorsque le produit de programme informatique est exécuté sur un ou plusieurs dispositifs informatiques.

13. Produit de programme informatique selon la revendication 12, mémorisé sur un support d'enregistrement lisible par ordinateur.

14. Dispositif (100) pour générer un mot de passe (306), le dispositif comprenant :
une unité de réception (102) apte à effectuer la réception d'une séquence d'entrée (304) incluant une séquence de saisies (402) et incluant une séquence de temps (420) associée à la séquence de saisies (402) ; et
une unité de génération (106) apte à effectuer la génération du mot de passe (306) sur la base d'une sortie (302) d'un générateur de nombre pseudo-aléatoire (104), de la séquence de saisies (402) et de la séquence de temps (420) de la séquence d'entrée (304).

15. Dispositif selon la revendication 14, configuré pour effectuer le procédé selon l'une quelconque des revendications 1 à 11.
